# FASCICULE DE BREVET EUROPEEN

(11) **EP 1 223 841 B1**
(45) Date de publication et mention de la délivrance du brevet: **16.07.2003**
(21) Numéro de dépôt: 00968051.3
(22) Date de dépôt: 16.10.2000
(51) Int. Cl.: A47J 37/08

(54) **GRILLE-PAIN**
BROTRÖSTER
TOASTER

(30) Priorité: 14.10.1999 FR 9912807
(43) Date de publication de la demande: 24.07.2002
(73) Titulaire: Hameur, 1417 Luxembourg (LU)
(72) Inventeur: LAZZER, Jean-Pierre, F-71210 Montchanin (FR)
(74) Mandataire: Bentz, Jean-Paul
(86) Numéro de dépôt international: FR0002881
(87) Numéro de publication internationale: WO01026523

(56) Documents cités:
- DE-A- 19 652 270
- DE-U- 9 015 300
- FR-A- 2 050 772
- FR-A- 2 763 233

## Description

La présente invention a pour objet un grille-pain ou toaster.

De tels appareils équipent pratiquement tous les ménages. Dans les grille-pain connus, une ou des résistances reliées à une source de tension électrique, généralement le secteur, font face à un logement dans lequel est introduit le pain à griller. Après un temps déterminé, le chauffage cesse et le pain grillé est extrait ou éjecté de l'appareil. Dans les appareils les plus évolués, il est connu d'inclure la ou les résistances dans des tubes de quartz afin d'éviter que l'utilisateur entre en contact avec un conducteur nu.

Pour des raisons de sécurité, les résistances sont incluses dans un coffret isolant qui empêche l'utilisateur de se brûler par contact avec l'appareil.

Malheureusement, ces coffrets sont opaques, ce qui interdit une surveillance aisée de l'état du pain à l'intérieur de l'appareil. C'est pour cette raison que la plupart des grille-pain sont munis d'une minuterie plus ou moins sophistiquée coupant automatiquement l'alimentation électrique au bout d'un temps déterminé, réglable.

Le grillage du pain s'effectue, après une montée en température relativement lente, en quelques secondes, après lesquelles le pain est brûlé. Par ailleurs, le temps de grillage varie avec la qualité physique du pain, telle que son degré de cuisson, par exemple.

Ainsi, La présente invention a pour objet de pallier les inconvénients précités et de permettre une surveillance visuelle du processus de grillage avec un arrêt lorsque le taux de grillage désiré est obtenu.

Elle a donc pour objet un grille-pain comprenant un coffret sensiblement parallélépipédique et thermiquement isolant et au moins une résistance électrique qui constitue un élément chauffant par rayonnement et qui est incluse dans le coffret, avec des parois latérales du coffret transparentes.

Un grille-pain avec parois latérales partiellement transparentes est connu du brevet FR-A- 2 050 772 et du brevet DE-U-9 015 300.6.

Il est ainsi possible de contrôler l'évolution du grillage et de l'arrêter au moment voulu, en fonction des goûts de l'utilisateur.

Selon une autre caractéristique de l'invention, sur chaque face du coffret, deux éléments chauffants sont disposés en haut et en bas du coffret, respectivement au-dessous et au-dessus de plaques transparentes constituant les parois latérales du coffret, les éléments chauffants étant inclus dans des logements réflecteurs.

Le pain est ainsi soumis, lorsque la résistance est reliée au secteur, à une irradiation uniforme, principalement infrarouge, la majeure partie du spectre d'émission se situant dans cette bande de longueur d'ondes.

Selon une autre caractéristique de l'invention, les résistances sont entourées par des réflecteurs semblables à ceux du brevet DE-A- 19 652 270, mais ici sur un secteur de sensiblement 270° et les réflecteurs inférieurs sont montés angulairement déplaçables par rapport aux résistances sous le contrôle de moyens de commande de leur déplacement, entre une position de repos, dans laquelle ils sont tournés vers le bas pour constituer un capot de protection, et une position active dans laquelle ils sont tournés vers un logement de réception d'un pain à griller.

Ces moyens de commande comportent un mécanisme à cames comprenant deux biellettes montées chacune de manière oscillante sur le coffret et pourvues chacune d'une première extrémité dotée d'une lumière dans laquelle est disposé un ergot lié à un réflecteur correspondant et d'une deuxième extrémité déplaçable conjointement avec un chariot de réception d'un pain.

On évite ainsi que lors de l'introduction du pain dans le coffret ou lors de la sortie du pain, des miettes viennent altérer l'efficacité des réflecteurs et des résistances.

Selon encore une caractéristique de l'invention, les parois latérales sont constituées par un double vitrage transparent et isolant. Elles peuvent également être constituées par un verre feuilleté.

La face interne de la ou des plaques de verre est de préférence recouverte d'une couche d'oxyde métallique réfléchissant le rayonnement infrarouge. Cette couche peut être colorée pour que le pain, irradié par l'infrarouge (ce qui ne pose pas de problèmes d'un point de vue optique) et en partie par le rouge de la résistance, présente la couleur de l'éclairage ambiant. Ce problème peut également être réglé en introduisant un filtre sur les parois transparentes.

D'autres caractéristiques et avantages de l'invention apparaîtront au cours de la description qui va suivre de modes de réalisation particuliers, donnée uniquement à titre d'exemple non limitatif, et faite en regard des dessins annexés dans lesquels :
- la figure 1 représente schématiquement en coupe transversale un grille-pain selon l'invention ;
- la figure 2 représente schématiquement le même appareil en perspective ;
- la figure 3 illustre schématiquement un autre exemple de réalisation d'un grille-pain conforme à l'invention, lors de l'introduction d'un pain ;
- la figure 4 montre le grille-pain de la figure, après introduction du pain et avant actionnement des résistances ; et
- la figure 5 montre le grille-pain des figures 3 et 4, lors du grillage.

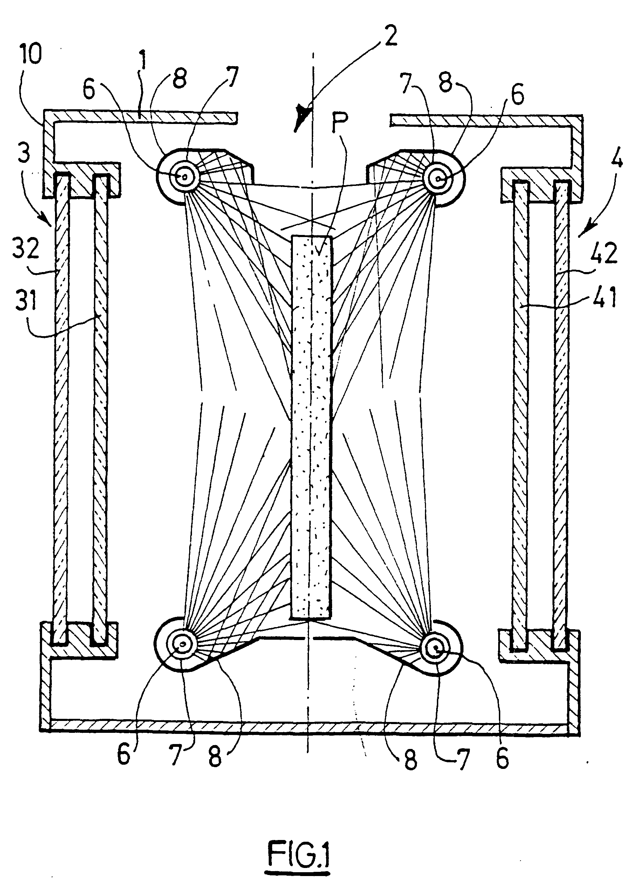

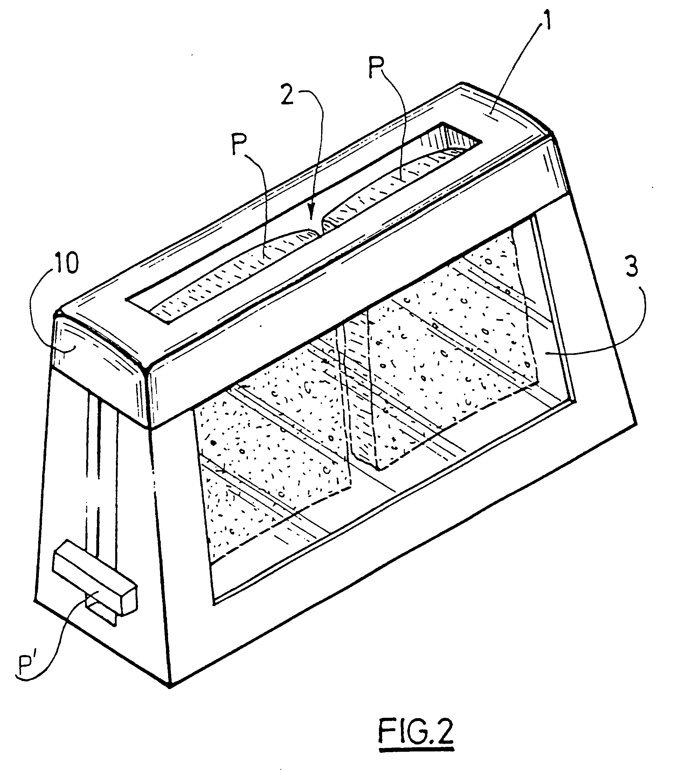

Sur les figures 1 et 2, on voit que le grille-pain est constitué par un coffret de forme générale parallélépipédique, par exemple métallique présentant à sa partie supérieure une fente 2 à travers laquelle peut être introduite une (ou plusieurs) tranche de pain P. Cette tranche est supportée en position médiane par rapport aux parois 3 et 4 par des moyens connus (non représentés) . La partie inférieure du coffret peut être coulissante pour constituer, comme connu en soi un ramasse-miettes.

Conformément à l'invention, les parois latérales du coffret, c'est à dire les parois longitudinales, sont constituées par des plaques de verre 31,32 et 41,42 respectivement, les plaques 32,42 constituant les faces externes et les plaques 31 et 41 les plaques internes. Dans l'exemple représenté, les plaques sont montées dans des rebords 31,41 du coffret 1 et, selon une autre caractéristique de l'invention, elles sont montées coulissantes dans deux rainures parallèles à la direction longitudinale de l'appareil.

Selon une autre caractéristique de l'invention, les plaques 31,32,41,42 peuvent coulisser ou être maintenues dans les rainures des rebords du coffret et elles sont ainsi démontables en vue de faciliter leur nettoyage.

Entre les deux plaques constituant les parois 3 et 4 sont prévus des espaces 5 qui normalement sont remplis d'air qui assurent une isolation thermique entre l'intérieur et l'extérieur du coffret.

En ce qui concerne les éléments chauffants, il est possible d'utiliser une seule résistance, sur chaque côté, entourée par un réflecteur, cette résistance étant montée dans la partie médiane de chaque face et ainsi n'altérant pas notablement la vision, mais de préférence, on utilise sur chaque face deux résistances montées en dehors du champ de vision.

Avantageusement, les résistances chauffantes 6 sont incluses dans des tubes de quartz 7 qui améliorent l'émission infrarouge.

Conformément à une caractéristique de l'invention elles sont réparties aux quatre coins du coffret, au-dessous et au-dessus des plaques 3 et 4 latérales, dégageant ainsi le champ de vision à travers les parois latérales.

En effet, comme visible sur la figure 1, le grille-pain comporte de préférence quatre résistances disposées au voisinage des faces internes des parois longitudinales du coffret, à savoir deux résistances supérieures et deux résistances inférieures, respectivement disposées au voisinage des extrémités supérieure et inférieure des plaques 3 et 4.

Pour que le pain soit sensiblement uniformément bombardé par les rayons infrarouges qui chauffent celui-ci par rayonnement, on prévoit autour de chaque tube de quartz 7 un réflecteur 8 qui oriente les faisceaux émis selon un angle de sensiblement 90° de sorte que les deux côtés du pain reçoivent une énergie uniforme, les réflecteurs 8 entourant les tubes de quartz 7 sur un secteur de sensiblement 270°. Dans la partie inférieure du coffret, les réflecteurs 8 jouent également le rôle de cache, de sorte que les éléments chauffants ne soient pas apparents de l'extérieur du coffret.

Le couvercle 10 du coffret 1 est, dans l'exemple représenté, amovible pour donner accès aux plaques en vue de leur extraction. Un interrupteur (non représenté) permet d'interrompre instantanément l'alimentation des résistances électriques 6 dont la température décroît rapidement. Bien entendu, des moyens connus permettent l'éjection du pain dès que le courant est coupé.

On conçoit que le grille-pain qui vient d'être décrit, qui est pourvu de parois longitudinales formées par des plaques transparentes et de résistances électriques décalées par rapport à ces dernières et associées chacune à un réflecteur permet de contrôler l'évolution du grillage du pain, tout en permettant un grillage uniforme.

On notera cependant que l'invention qui vient d'être décrite n'est pas limitée au mode de réalisation envisagé.

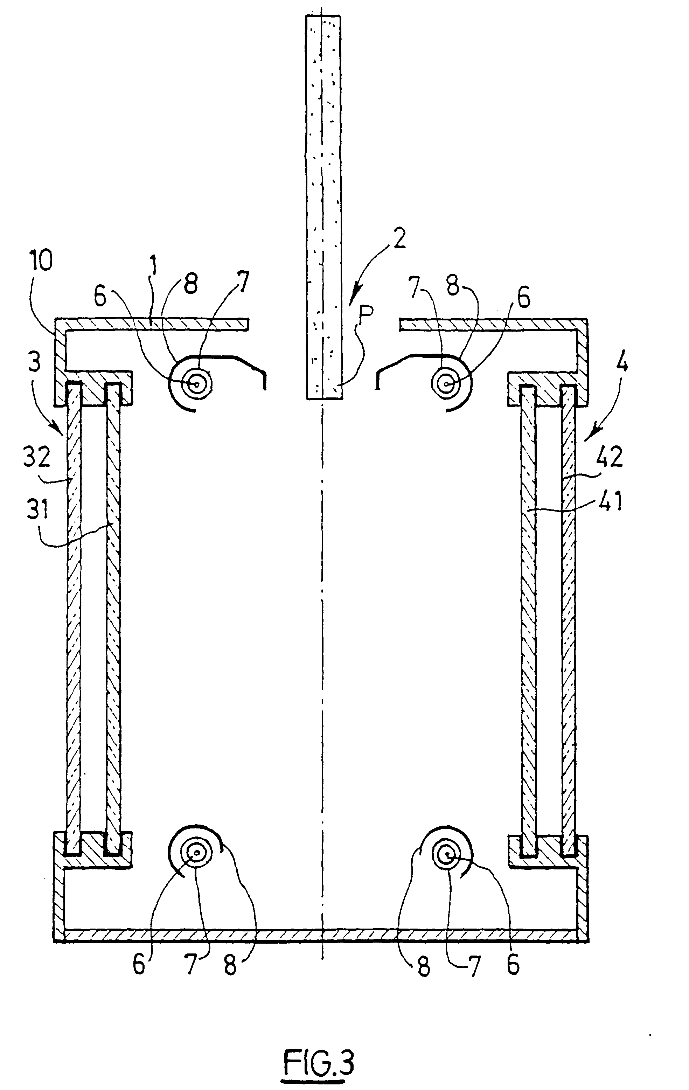

On va en effet décrire, en référence aux figures 3 à 5, un autre mode de réalisation.

Sur ces figures, des éléments identiques aux figures 1 et 2 portent les mêmes numéros de référence.

Comme dans l'exemple de réalisation décrit précédemment, le grille-pain comporte un coffret 1 pourvu de faces longitudinales équipées chacune de plaques transparentes 31, 32, 41, 42 permettant à un utilisateur de surveiller l'évolution du grillage et d'une fente 2 d'introduction d'un pain qui débouche dans un logement de réception correspondant.

Comme cela est classique, ce logement est pourvu d'un chariot (non représenté) déplaçable de haut en bas sous l'action d'une poignée P' actionnable manuellement par un utilisateur pour l'insertion d'un pain à griller. Par exemple un ressort sollicite le chariot en position haute de manière à le ramener automatiquement dans cette position, en fin de grillage.

Par ailleurs, le grille-pain est pourvu de résistances électriques 6 de chauffage, placées dans un tube de quartz 7 et disposées intérieurement au voisinage des zones d'extrémité supérieure et inférieure des plaques transparentes 31, 32, 41 et 42.

C'est-à-dire, le grille-pain est pourvu de deux résistances supérieures et deux résistances inférieures.

Chaque résistance 6 est associée à un réflecteur 8 concave adapté pour diriger le rayonnement infrarouge émis par les résistances 6 vers le pain P à griller.

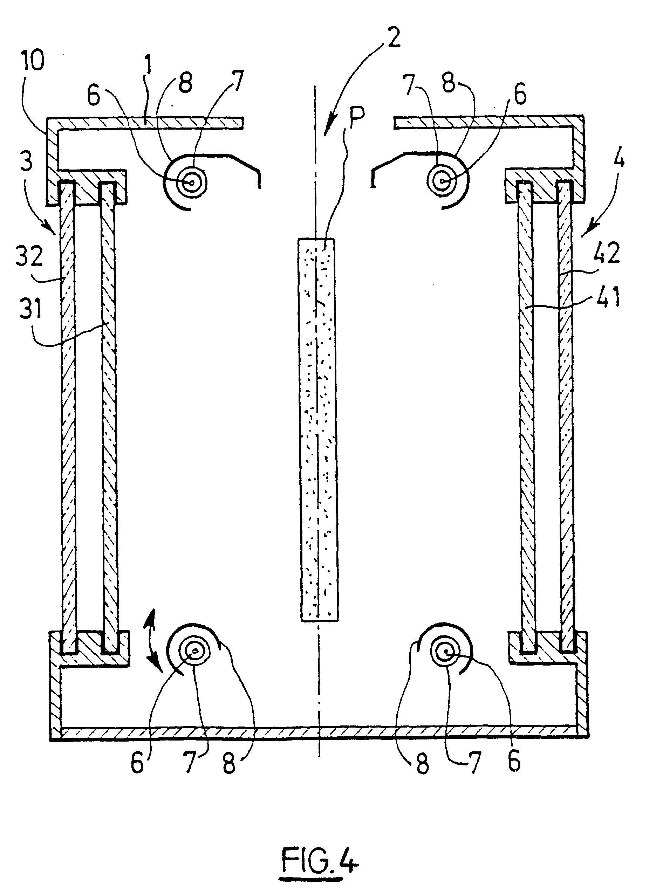

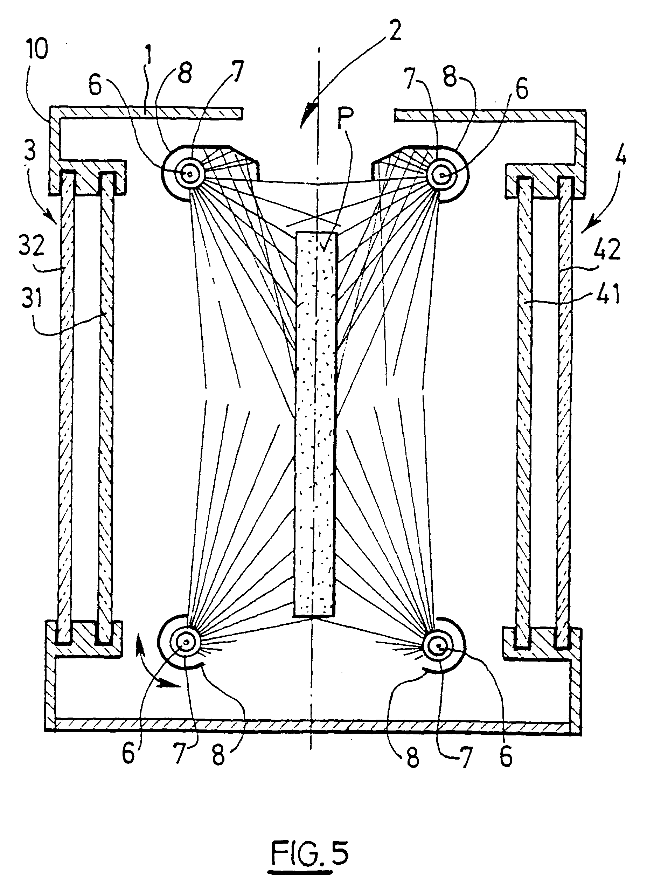

Contrairement au mode de réalisation décrit précédemment en référence aux figures 1 et 2, les réflecteurs 8 inférieurs, qui ont une forme générale de secteur de cylindre, sont montés angulairement déplaçables par rapport aux résistances 6 entre une première position angulaire, visible sur les figures 3 et 4, dans laquelle ils adoptent une position dans laquelle leur concavité est tournée vers le bas, de manière à constituer un cache de protection évitant que, lors de l'introduction d'un pain dans le grille-pain, ou lors de la sortie de ce dernier, des miettes tombent sur les tubes de quartz 7 ou sur la surface active des réflecteurs, et une position active, visible sur la figure 5, dans laquelle la concavité des réflecteurs inférieurs est tournée vers le logement de réception du pain P à griller.

Plus précisément, les réflecteurs inférieurs sont montés angulairement déplaçables entre les positions actives et de repos sous le contrôle de moyens de commande appropriés, de manière que les réflecteurs inférieurs se situent dans leur position de repos lors de l'insertion ou de la sortie d'un pain P et qu'ils se situent dans leur position active au cours du grillage d'un pain.

De préférence, ces moyens de commande se présentent sous la forme d'un mécanisme à came associé au chariot équipant le logement de réception de pain P de manière à transformer le mouvement rectiligne du chariot en un mouvement de rotation provoquant le déplacement des réflecteurs inférieurs.

Par exemple, le mécanisme à came comporte deux biellettes assurant chacune la commande du déplacement angulaire de l'un des réflecteurs et montées chacune de manière oscillante sur le coffret. Ces biellettes sont pourvues chacune d'une première extrémité dotée d'une lumière dans laquelle est disposé un ergot lié à un réflecteur correspondant et d'une deuxième extrémité liée à la poignée P', laquelle est solidaire du chariot.

Ainsi, selon cet agencement, la course du chariot, dans le sens d'introduction d'un pain, comporte une première partie au cours de laquelle le pain est déplacé dans le coffret et une deuxième partie au cours de laquelle les réflecteurs sont actionnés pour les placer en position active.

Au contraire, dans le sens de l'éjection d'un pain, après grillage, la course du chariot comporte une première partie lors de laquelle les réflecteurs sont placés en position de repos et une deuxième partie au cours de laquelle le pain est éjecté.

Il va de soi que de nombreuses variantes peuvent être apportées, notamment par substitution de moyens techniques équivalents, sans sortir pour cela du cadre de l'invention.

C'est ainsi, par exemple, que la protection des résistances et des réflecteurs inférieurs peut être obtenue au moyen de capots spécifiques, déplaçables sous l'action de moyens de commande associés au chariot pour venir couvrir ces résistances et réflecteurs lors de l'introduction et de l'éjection d'un pain, ces derniers étant, dans ce cas, fixes.

## Revendications

1. Grille-pain comprenant un coffret (1) thermiquement isolant, sensiblement parallélépipédique, et un chariot de réception du pain à griller, au moins quatre résistances (6), constituant des éléments chauffant par rayonnement, incluses dans le coffret, deux éléments chauffants (6) étant disposés en haut et en bas de chaque paroi latérale (3,4) du coffret, les parois latérales (3,4) du coffret étant au moins en partie transparentes, les éléments chauffants (6) étant inclus dans des logements réflecteurs (8) entourant les éléments chauffants sur un secteur de sensiblement 270°, **caractérisé en ce qu'**il comprend des moyens pour protéger les résistances inférieures des miettes de pain lors de l'introduction du pain dans le coffret (1) et/ou lors de la sortie du pain, les logements réflecteurs comprenant une partie au moins semi-cylindrique s'ouvrant vers le centre du grille-pain.

2. Grille-pain selon la revendication 1 **caractérisé en ce que**, les réflecteurs inférieurs (8) sont, au moins en partie, montés pivotants par rapport aux résistances (6) sous le contrôle de moyens de commande de leur déplacement entre une position de repos, dans laquelle leur ouverture est tournée vers le bas pour constituer un capot de protection et une position active dans laquelle leur ouverture est tournée vers le chariot de réception du pain à griller.

3. Grille-pain selon la revendication 2, **caractérisé en ce que** lesdits moyens de commande comportent un mécanisme à came comprenant deux biellettes montées chacune de manière oscillante sur le coffret et pourvues chacune d'une première extrémité dotée d'uns lumière dans laquelle est disposé un ergot lié à un réflecteur correspondant et d'uns deuxième extrémité déplaçable conjointement avec le chariot de réception du pain.

4. Grille-pain selon l'une des revendications 1 à 3, **caractérisé en ce que** chaque paroi latérale est constituée par un double vitrage isolant (31,32,41,42).

5. Grille-pain selon l'une des revendications 1 à 3, **caractérisé en ce que** les parois latérales sont constituées par du verre feuilleté.

6. Grille-pain selon l'une des revendications 4 ou 5, **caractérisé en ce que** la face interne des parois est recouverte d'une couche de matériau réfléchissant l'infrarouge.

7. Grille-pain selon la revendication 6, **caractérisé en ce que** la couche de matériau réfléchissant l'infrarouge est colorée.

8. Grille-pain selon l'une quelconque des revendications précédentes, **caractérisé en ce que** les plaques (31,41,32,42) constituant les parois latérales (3,4) sont montées de manière amovible dans au moins une rainure du coffret (1).

## Patentansprüche

1. Brotröster umfassend ein wärmeisolierendes Gehäuse (1), im Wesentlichen als Parallelepiped, und ein Aufnahmelaufwerk für das zu röstende Brot, mindestens vier Widerstände (6), die Strahlungsheizelemente bilden, die im Gehäuse enthalten sind, wobei zwei Heizelemente (6) oben und unten an jeder Seitenwand (3, 4) des Gehäuses angeordnet sind, wobei die Seitenwände (3, 4) des Gehäuses mindestens teilweise transparent sind, wobei die Heizelemente (6) in Reflektoraufnahmen (8) enthalten sind, die die Heizelemente in einem Sektor von im Wesentlichen 270° umgeben, **dadurch gekennzeichnet, dass** er Mittel aufweist zum Schutz der unteren Widerstände vor Brotkrümeln, beim Einführen des Brotes in das Gehäuse (1) und/oder beim Herausnehmen des Brotes, wobei die Reflektoraufnahmen einen mindestens halbzylindrischen Teil aufweisen, der sich zur Mitte des Brotrösters öffnet.

2. Brotröster nach Anspruch 1, **dadurch gekennzeichnet, dass** die unteren Reflektoren (8) mindestens teilweise in Bezug auf die Widerstände (6) schwenkbar angebracht sind unter der Kontrolle von Steuerungsmitteln für ihre Verschiebung zwischen einer Ruheposition, in der ihre Öffnung nach unten gedreht ist. um eine Schutzabdeckung zu bilden, und einer aktiven Position, in der ihre Öffnung zum Aufnahmelaufwert für das zu röstende Brot gedreht ist.

3. Brotröster nach Anspruch 2, **dadurch gekennzeichnet, dass** die Steuerungsmittel einen Zahnmechanismus aufweisen, der zwei Schwingarme umfasst, deren jeder oszillierend auf dem Gehäuse angebracht ist und jeder mit einem ersten Ende versehen ist, das mit einem Durchtritt ausgerüstet ist, in dem ein mit einem entsprechenden Reflektor verbundener Ansatz angeordnet ist, und mit einem zweiten Ende, das zusammen mit dem Aufnahmelaufwerk für des Brot verschiebbar ist.

4. Brotröster nach einem der Ansprüche 1 bis 3, **dadurch gekennzeichnet, dass** jede Seitenwand durch eine doppelte Isolierverglasung (31, 32, 41, 42) gebildet ist.

5. Brotröster nach einem der Ansprüche 1 bis 3, **dadurch gekennzeichnet, dass** die Seitenwände durch Sicherheitsglas gebildet sind.

6. Brotröster nach einem der Ansprüche 4 bis 5, **dadurch gekennzeichnet, dass** die Innenseite der Wände mit einer Schicht aus Infrarot reflektierendem Material überzogen ist.

7. Brotröster nach Anspruch 6, **dadurch gekennzeichnet, dass** die Schicht aus Infrarot reflektierendem Material gefärbt ist.

8. Brotröster nach einem der vorhergehenden Ansprüche, **dadurch gekennzeichnet, dass** die Platten (31, 41, 32, 42), die die Seitenwände (3, 4) bilden, in mindestens einer Rille des Gehäuses (1) abnehmbar angebracht sind.

## Claims

1. Toaster comprising an approximately parallelepiped-shaped and thermally insulating enclosure (1), and a carrier for receiving a slice of bread to be toasted, at least four elements (6), constituting elements heating by radiation, enclosed in the enclosure, two heating elements (6) being arranged at the top and at the bottom of each side wall (3, 4) of the enclosure, the side walls (3, 4) being at least in part transparent, the heating elements (6) being enclosed in reflecting recesses (8) surrounding the heating elements over a sector of approximately 270°, **characterised in that** it comprises means for protecting the lower elements from bread crumbs during the insertion of the slice of bread into the enclosure (1) and/or during removal of the bread, the reflecting recesses comprising a part which is at least semi-cylindrical, opening towards the centre of the toaster.

2. Toaster according to Claim 1 **characterised in that**, the lower reflectors (8) are, at least in part, mounted so that they pivot relative to the elements (6) under the control of means of control of their displacement between a resting position, in which their opening is turned downwards to constitute a protective hood and an active position in which their opening is turned towards the carrier for receiving the bread to be toasted.

3. Toaster according to Claim 2 **characterised in that** said means of control comprise a cam mechanism comprising two small rods each mounted in an oscillating manner on the enclosure and each provided with a first end equipped with a light in which is disposed a pin linked to a corresponding reflector and a second end which can be displaced in conjunction with the carrier receiving the bread.

4. Toaster according to Claims 1 to 3 **characterised in that** each side wall is constituted by an insulating double-glazed panel (31, 32, 41, 42)

5. Toaster according to Claims 1 to 3 **characterised in that** the side walls are constituted by laminated glass.

6. Toaster according to one of Claims 4 or 5 **characterised in that** the internal face of the walls is coated with a layer of material reflecting infrared radiation.

7. Toaster according to Claim 6 **characterised in that** the layer of material reflecting infrared is coloured.

8. Toaster according to any one of the preceding claims, **characterised in that** the panels (31, 41, 32, 42) constituting the side walls (3, 4) are mounted in an immovable manner in at least one groove in the enclosure (1).
